# FASCICULE DE BREVET EUROPEEN

(11) **EP 3 197 329 B1**
(45) Date de publication et mention de la délivrance du brevet: **05.05.2021**
(21) Numéro de dépôt: 15781383.3
(22) Date de dépôt: 22.09.2015
(51) Int. Cl.: A47J 36/02

(54) **RÉCIPIENT DE CUISSON COMPORTANT UNE FACE INTÉRIEURE EN ACIER INOXYDABLE PARTIELLEMENT REVÊTUE, ET PROCÉDÉ D'OBTENTION**
KOCHGEFÄSS MIT EINER TEILWEISE BESCHICHTETEN EDELSTAHLINNENFLÄCHE UND VERFAHREN ZUR HERSTELLUNG DAVON
COOKING VESSEL COMPRISING A PARTIALLY COATED STAINLESS STEEL INNER SURFACE, AND METHOD FOR PRODUCING SAME

(30) Priorité: 23.09.2014 FR 1458977
(43) Date de publication de la demande: 02.08.2017
(73) Titulaire: SEB S.A., 69130 Ecully (FR)
(72) Inventeur: ALLEMAND, Simon, 74960 Cran Gevrier (FR)
(74) Mandataire: SEB Développement
(86) Numéro de dépôt international: PCT/FR2015/052541
(87) Numéro de publication internationale: WO 2016/046492

(56) Documents cités:
- WO-A1-2011/069351
- FR-A3- 2 813 177
- US-A- 5 628 426
- US-A1- 2008 083 747
- US-A1- 2014 004 311

## Description

La présente invention concerne le domaine technique des récipients de cuisson comportant une face intérieure en acier inoxydable partiellement revêtue.

La présente invention se rapporte plus particulièrement aux récipients de cuisson obtenus par emboutissage à partir d'une tôle d'acier inoxydable ou à partir d'une tôle multicouche présentant au moins une couche externe en acier inoxydable, ainsi qu'à leur procédé d'obtention.

La présente invention concerne notamment les articles culinaires prévus pour être disposés sur un foyer de chauffe, tels que par exemple les poêles ou les casseroles.

La présente invention concerne également les cuves d'appareils électriques de cuisson, notamment mais non exclusivement les cuves amovibles.

Le document US 2014/004311 divulgue un récipient de cuisson comportant un corps de récipient présentant une face intérieure texturée partiellement revêtue. Les surfaces supérieures de la face intérieure texturée peuvent présenter une finition anodisée. Toutefois ce document ne divulgue pas de corps de récipient présentant une face intérieure texturée en acier inoxydable qui soit partiellement revêtue.

Le document WO 2011/069351 divulgue un récipient de cuisson dont la surface de cuisson présente une pluralité de portions relevées indépendantes ménageant des rainures communicantes. Le fond des rainures est recouvert d'un revêtement antiadhésif. Les portions relevées sont dépourvues de revêtement antiadhésif et s'élèvent au-dessus du revêtement antiadhésif. Toutefois ce document n'envisage pas de revêtement antiadhésif sur des côtés des portions relevées reliant les sommets des portions relevées aux fonds des rainures 3.

Le document KR100804387B1 divulgue un récipient de cuisson comportant une face intérieure en acier inoxydable partiellement revêtue. La face intérieure présente une pluralité de creux dont le fond porte un revêtement antiadhésif. La face intérieure présente des nervures intercalées entre les creux. Les sommets non revêtus des nervures s'élèvent au-dessus du revêtement antiadhésif couvrant le fond des creux. Toutefois les nervures présentent des faces latérales non revêtues s'élevant au-dessus du fond des creux. Les faces latérales des nervures sont perpendiculaires au fond des creux. Une telle réalisation apparaît difficile à réaliser dans de l'acier inoxydable en utilisant un procédé d'emboutissage comme proposé dans ce document.

Un but de la présente invention est de proposer un récipient de cuisson présentant une surface de cuisson associant facilité de nettoyage et durabilité, même en cas d'utilisation avec des ustensiles réalisés en matériau dur, tel que par exemple des ustensiles métalliques.

Un autre but de la présente invention est de proposer un procédé d'obtention d'un récipient de cuisson présentant une surface de cuisson associant facilité de nettoyage et durabilité, même en cas d'utilisation avec des ustensiles réalisés en matériau dur, tels que par exemple des ustensiles métalliques.

Ces buts sont atteints avec un récipient de cuisson comportant un corps de récipient présentant une face intérieure texturée en acier inoxydable partiellement revêtue, la face intérieure texturée présentant une pluralité de nervures s'élevant au-dessus de creux, les creux présentant des fonds recouverts d'un revêtement antiadhésif, les nervures présentant des sommets non revêtus et des côtés distincts des fonds des creux, les côtés des nervures reliant les sommets des nervures aux fonds des creux, les sommets des nervures s'élevant au-dessus du revêtement antiadhésif recouvrant les fonds des creux, les fonds des creux et les côtés des nervures présentent une surface rugueuse sous le revêtement antiadhésif, pour favoriser l'accrochage du revêtement antiadhésif, du fait que les côtés des nervures forment des rampes reliant les sommets des nervures aux fonds des creux, et que le revêtement antiadhésif s'élève sur les côtés des nervures à partir des fonds des creux en direction des sommets des nervures, sans dépasser la hauteur des sommets. Ces dispositions permettent une réalisation plus facile de la partie métallique du corps de récipient. Ces dispositions permettent aussi une meilleure tenue du revêtement antiadhésif, du fait de la réalisation du revêtement antiadhésif sur la surface entière de la face intérieure texturée, suivie d'un brossage des sommets des nervures. La réalisation initiale d'un seul tenant du revêtement antiadhésif permet une meilleure qualité de revêtement. La durabilité du récipient de cuisson est améliorée, tout en conservant une bonne résistance mécanique de la surface de cuisson grâce aux sommets métalliques des nervures s'élevant au-dessus des fonds revêtus des creux. La disposition concernant les côtés des nervures formant des rampes reliant les sommets des nervures aux fonds des creux permet de favoriser la tenue du revêtement sur les côtés des nervures.

Avantageusement, l'épaisseur du revêtement antiadhésif est plus importante sur la partie inférieure des côtés des nervures que sur la partie supérieure des côtés des nervures. Cette disposition permet de favoriser la tenue du revêtement sur la partie inférieure des côtés des nervures et sur la partie adjacente des fonds des creux.

Avantageusement alors, la largeur des sommets des nervures est inférieure à la distance entre les sommets de deux nervures adjacentes. Cette disposition permet d'obtenir une face intérieure texturée présentant une surface revêtue plus importante que la surface métallique non revêtue des sommets des nervures.

Avantageusement encore, la largeur des sommets des nervures est inférieure à la largeur des fonds des creux s'étendant entre deux nervures adjacentes. Cette disposition permet d'obtenir une face intérieure texturée présentant une surface revêtue encore plus importante.

Avantageusement encore, les côtés des nervures s'élèvent par rapport aux fonds des creux avec un angle inférieur à 45°, et de préférence avec un angle compris entre 20° et 40°. Cette disposition permet de faciliter la réalisation des nervures. Cette disposition permet également d'améliorer l'accrochage du revêtement sur les côtés des nervures.

Avantageusement encore, les sommets des nervures sont plans. Cette disposition permet de faciliter le déplacement des ustensiles de cuisson sur les nervures, pour remuer, séparer ou servir les aliments. Cette disposition permet également de faciliter la réalisation des sommets des nervures. Si désiré, les sommets des nervures peuvent être polis, ce qui permet de réduire l'accrochage des aliments.

Avantageusement encore, les nervures présentent une section trapézoïdale. Cette disposition permet de faciliter la réalisation des nervures.

Avantageusement encore, la profondeur de gravure définie entre les sommets des nervures et les fonds des creux est comprise entre 0,05 mm et 0,2 mm. Cette disposition permet d'obtenir un récipient de cuisson présentant de bonnes propriétés d'utilisation, avec une réalisation qui reste aisée.

Selon une forme de réalisation, le revêtement antiadhésif présente une couche externe de PTFE.

Selon une autre forme de réalisation, le revêtement antiadhésif présente une couche externe de sol gel céramique.

Le corps de récipient peut être réalisé en acier inoxydable. Avantageusement alors, une plaque de diffusion thermique en aluminium recouvre partiellement la face extérieure du récipient de cuisson, pour une bonne répartition de la chaleur. Avantageusement encore, une plaque de fond en acier inoxydable recouvre la plaque de diffusion thermique. Avantageusement alors, la plaque de fond est réalisée en acier inoxydable ferritique, pour permettre un chauffage par induction du récipient de cuisson.

Le corps de récipient peut aussi être réalisé en matériau multicouche comportant au moins une couche externe en acier inoxydable. Avantageusement encore, le récipient de cuisson comporte au moins une poignée montée sur le corps de récipient.

Avantageusement encore, les nervures sont reliées entre elles et délimitent des creux séparés. Cette disposition permet de faciliter le déplacement des ustensiles de cuisson sur les nervures, pour remuer, séparer ou servir les aliments.

Ces buts sont atteints également avec un procédé d'obtention d'un récipient de cuisson, comprenant les étapes suivantes :
- Réalisation ou fourniture d'un flan à partir d'une tôle d'acier inoxydable,
- Emboutissage du flan pour former une calotte comportant une face intérieure et une face extérieure, la face intérieure comportant une zone de fond plane entourée par une paroi latérale,
- Frappe à chaud d'un fond diffuseur sur la face extérieure de la calotte, avec gravure d'un tramage sur au moins une partie de la zone de fond de la face intérieure de la calotte, pour former un réseau de nervures présentant des sommets s'élevant au-dessus de creux et des côtés distincts des fonds des creux, les côtés des nervures reliant les sommets des nervures aux fonds des creux, les côtés des nervures formant des rampes reliant les sommets des nervures aux fonds des creux,
- Sablage d'au moins la zone de fond gravée de la face intérieure de la calotte, pour créer des rugosités,
- Réalisation d'un revêtement antiadhésif sur au moins la zone de fond gravée sablée,
- Brossage et/ou polissage d'au moins la zone de fond gravée sablée revêtue, pour faire apparaître l'acier inoxydable sur les sommets des nervures.

Avantageusement alors, le procédé consiste à frapper à chaud une plaque de fond en acier inoxydable ferritique sur la face du fond diffuseur opposée à la calotte, lors de la frappe à chaud du fond diffuseur sur la face extérieure de la calotte, pour permettre un chauffage par induction du récipient de cuisson.

Ces buts sont atteints également avec un procédé d'obtention d'un récipient de cuisson, comprenant les étapes suivantes :
- Réalisation ou fourniture d'un flan à partir d'une tôle d'acier multicouche comportant au moins une face externe en acier inoxydable,
- Gravure d'un tramage sur au moins une partie de ladite face externe en acier inoxydable, pour former un réseau de nervures présentant des sommets s'élevant au-dessus de creux et des côtés distincts des fonds des creux, les côtés des nervures reliant les sommets des nervures aux fonds des creux, les côtés des nervures formant des rampes reliant les sommets des nervures aux fonds des creux,
- Emboutissage du flan pour former une calotte comportant une face intérieure et une face extérieure, la face intérieure comportant une zone de fond entourée par une paroi latérale, les nervures s'étendant sur au moins une partie de la zone de fond,
- Sablage d'au moins la zone de fond gravée pour créer des rugosités,
- Réalisation d'un revêtement antiadhésif sur au moins la zone de fond gravée sablée,
- Brossage et/ou polissage de la zone de fond gravée sablée revêtue, pour faire apparaître l'acier inoxydable sur les sommets des nervures.

La gravure du tramage peut notamment être réalisée par frappe, de préférence par frappe à chaud, ou par gravure laser.

Ces buts sont atteints également avec un procédé d'obtention d'un récipient de cuisson, comprenant les étapes suivantes :
- Réalisation ou fourniture d'un flan à partir d'une tôle d'acier multicouche comportant au moins une face externe en acier inoxydable,
- Emboutissage du flan pour former une calotte comportant une face intérieure formée par ladite face externe en acier inoxydable et une face extérieure, la face intérieure comportant une zone de fond entourée par une paroi latérale,
- Gravure d'un tramage sur au moins une partie de la zone de fond, pour former un réseau de nervures présentant des sommets s'élevant au-dessus de creux et des côtés distincts des fonds des creux, les côtés des nervures reliant les sommets des nervures aux fonds des creux, les côtés des nervures formant des rampes reliant les sommets des nervures aux fonds des creux
- Sablage d'au moins la zone de fond gravée pour créer des rugosités,
- Réalisation d'un revêtement antiadhésif sur au moins la zone de fond gravée sablée,
- Brossage et/ou polissage de la zone de fond gravée sablée revêtue, pour faire apparaître l'acier inoxydable sur les sommets des nervures.

La gravure du tramage peut notamment être réalisée par frappe, de préférence par frappe à chaud, ou par gravure laser.

Avantageusement alors, un polissage des sommets des nervures est réalisé avant l'enduction du revêtement antiadhésif, afin de limiter l'adhérence du revêtement antiadhésif sur les sommets des nervures.

Ces buts sont atteints également avec un récipient de cuisson obtenu par un procédé selon les caractéristiques précitées.

L'invention sera mieux comprise à l'étude d'un exemple de réalisation d'un récipient de cuisson, et de trois modes de réalisation d'un procédé d'obtention d'un récipient de cuisson, pris à titre non limitatif, illustrés dans les figures annexées, dans lesquelles :
- la figure 1 est une vue de dessus schématique d'un exemple de réalisation d'un récipient de cuisson selon l'invention, la figure 1a étant une vue partielle agrandie de la face intérieure du récipient de cuisson représenté sur la figure 1,
- la figure 2 est une vue partielle en coupe du récipient de cuisson illustré sur les figures 1 et 1a,
- les figures 3 à 8 illustrent schématiquement les étapes d'un premier mode de réalisation d'un procédé d'obtention d'un récipient de cuisson, selon l'invention,

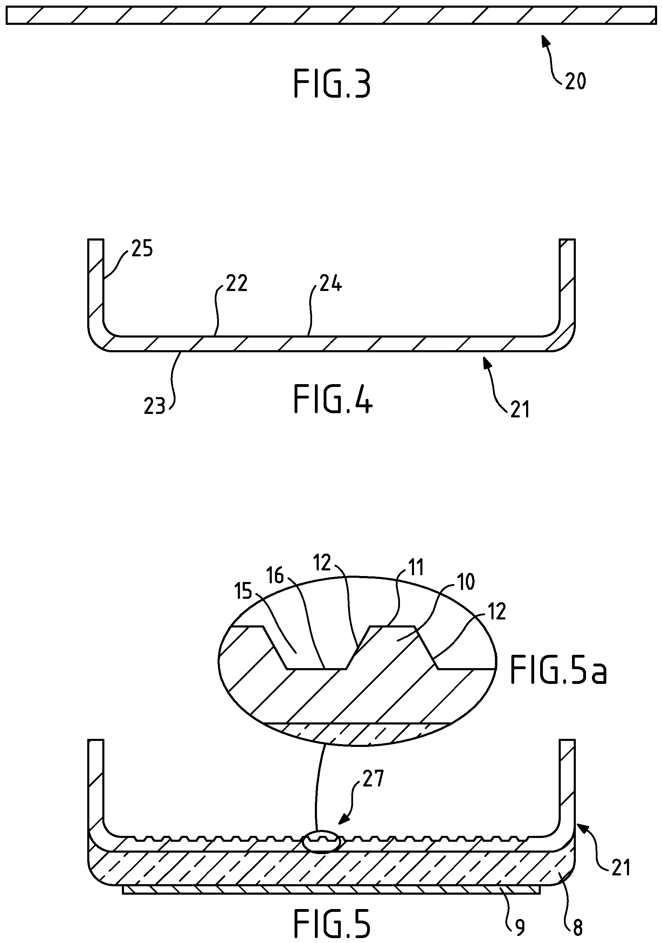

- la figure 3 est une vue schématiquement en coupe d'un flan en acier inoxydable,
- la figure 4 est une vue schématiquement en coupe du flan représenté sur la figure 3, après emboutissage,
- la figure 5 est une vue schématiquement en coupe du flan embouti représenté sur la figure 4, après assemblage d'un fond diffuseur rapporté sur la face externe du fond du flan et gravure du fond de la face interne du flan, la figure 5a étant une vue partielle agrandie de la partie supérieure du fond de la face interne du flan représenté sur la figure 5,

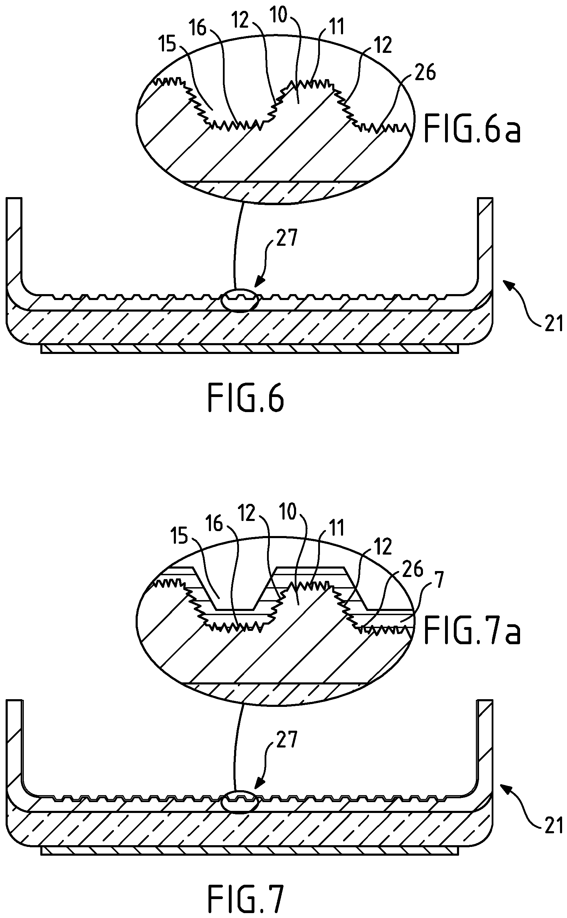

- la figure 6 est une vue schématiquement en coupe du flan embouti représenté sur la figure 5, après sablage du fond de la face interne du flan, la figure 6a étant une vue partielle agrandie de la partie supérieure du fond de la face interne du flan représenté sur la figure 6,
- la figure 7 est une vue schématiquement en coupe du flan embouti sablé représenté sur la figure 6, après réalisation d'un revêtement sur le fond de la face interne du flan, la figure 7a étant une vue partielle agrandie de la partie supérieure du fond de la face interne du flan représenté sur la figure 7,

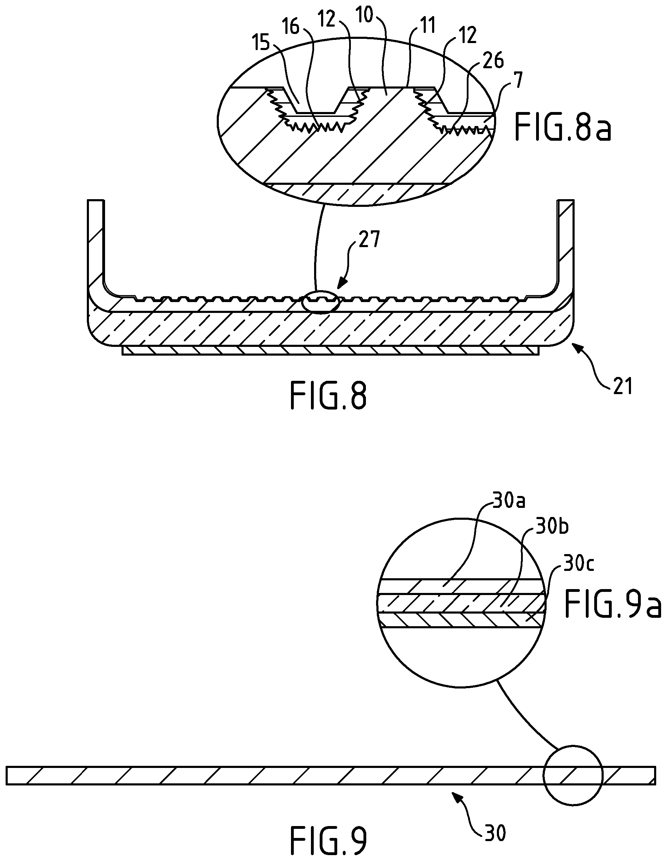

- la figure 8 est une vue schématiquement en coupe du flan embouti sablé revêtu représenté sur la figure 7, après brossage et/ou polissage des sommets des nervures formées sur le fond de la face interne du flan, la figure 8a étant une vue partielle agrandie de la partie supérieure du fond de la face interne du flan représenté sur la figure 8,
- les figures 9 à 14 illustrent schématiquement les étapes d'un deuxième mode de réalisation d'un procédé d'obtention d'un récipient de cuisson, selon l'invention,
- la figure 9 est une vue schématiquement en coupe d'un flan à trois couches comportant au moins une face externe en acier inoxydable, les trois couches étant représentées sur la figure 9a illustrant une partie du flan représenté sur la figure 9,

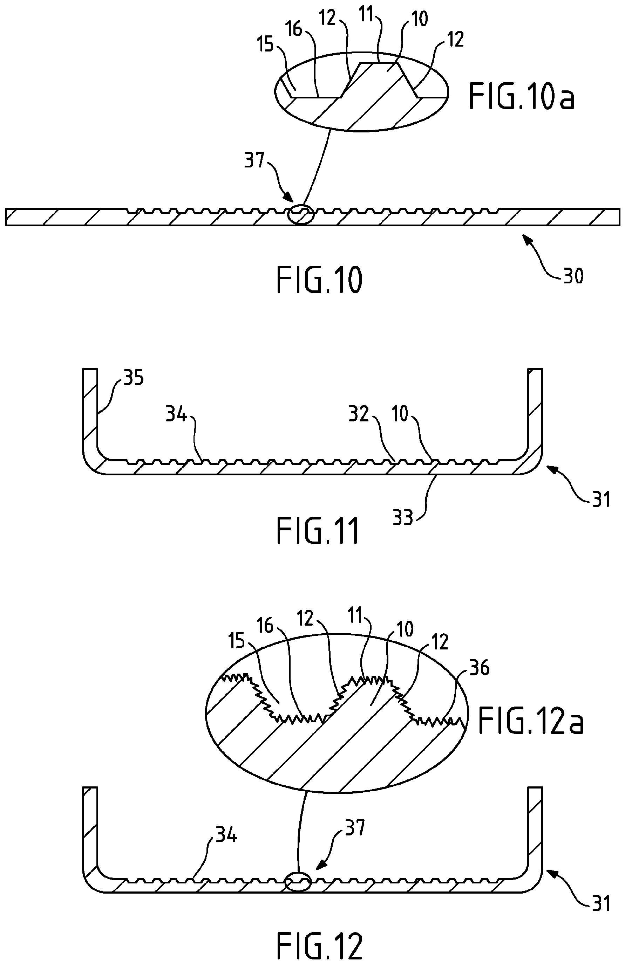

- la figure 10 est une vue schématiquement en coupe du flan représenté sur la figure 9, après gravure d'une partie de la face interne du flan, la figure 10a étant une vue partielle agrandie de la partie supérieure de la face interne du flan représenté sur la figure 10,
- la figure 11 est une vue schématiquement en coupe du flan gravé représenté sur la figure 10, après emboutissage,
- la figure 12 est une vue schématiquement en coupe du flan gravé embouti représenté sur la figure 11, après sablage du fond de la face interne du flan, la figure 12a étant une vue partielle agrandie de la partie supérieure du fond de la face interne du flan représenté sur la figure 12,

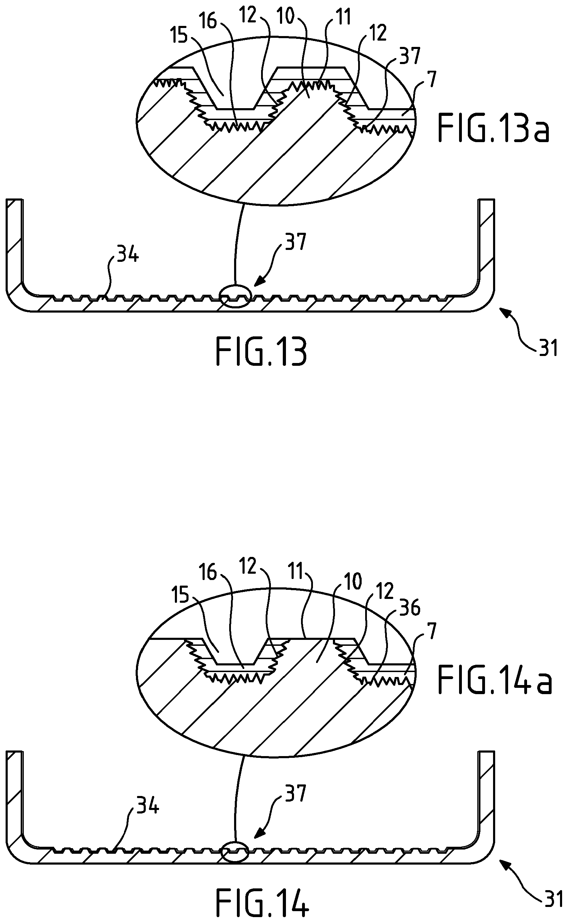

- la figure 13 est une vue schématiquement en coupe du flan gravé embouti sablé représenté sur la figure 12, après réalisation d'un revêtement sur le fond de la face interne du flan, la figure 13a étant une vue partielle agrandie de la partie supérieure du fond de la face interne du flan représenté sur la figure 13,
- la figure 14 est une vue schématiquement en coupe du flan embouti sablé revêtu représenté sur la figure 13, après brossage et/ou polissage des sommets des nervures formées sur le fond de la face interne du flan, la figure 14a étant une vue partielle agrandie de la partie supérieure du fond de la face interne du flan représenté sur la figure 14.

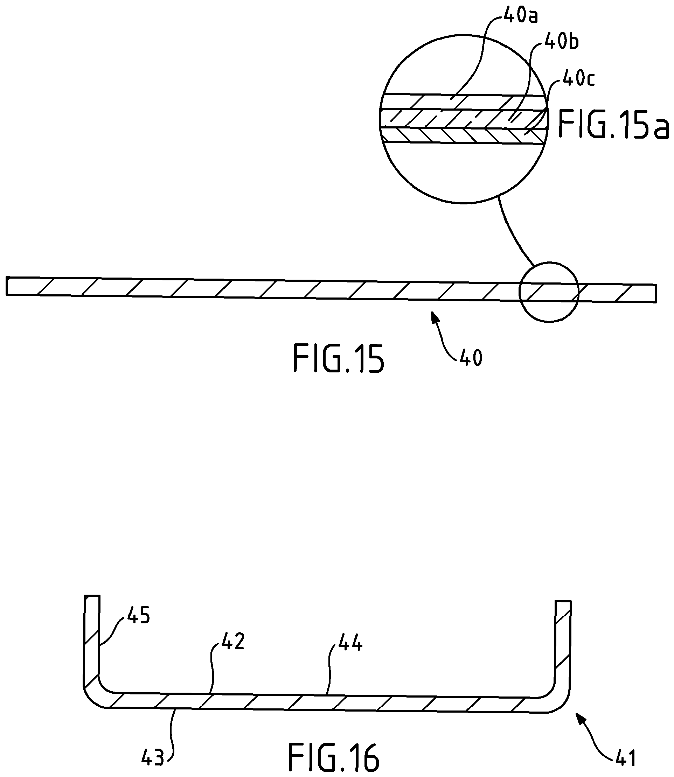

- les figures 15 à 20 illustrent schématiquement les étapes d'un troisième mode de réalisation d'un procédé d'obtention d'un récipient de cuisson, selon l'invention,
- la figure 15 est une vue schématiquement en coupe d'un flan à trois couches comportant au moins une face externe en acier inoxydable, les trois couches étant représentées sur la figure 15a illustrant une partie du flan représenté sur la figure 15,
- la figure 16 est une vue schématiquement en coupe du flan représenté sur la figure 15, après emboutissage,

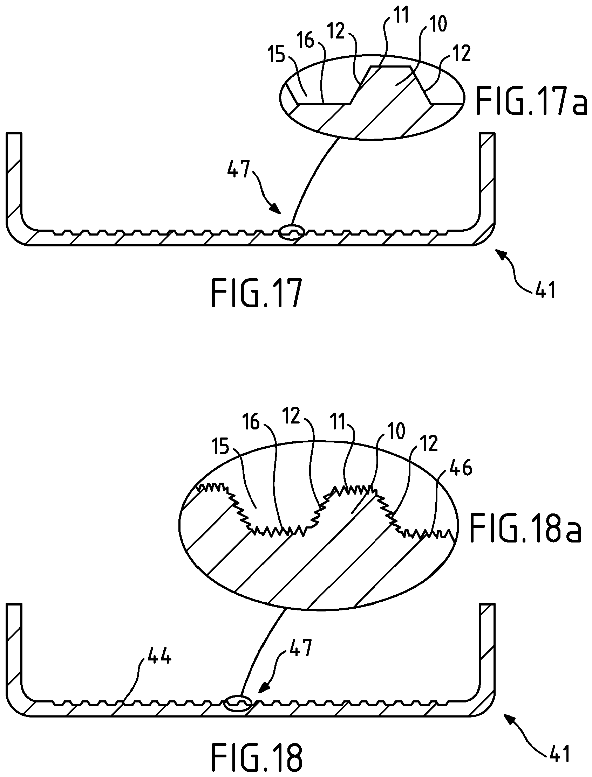

- la figure 17 est une vue schématiquement en coupe du flan embouti représenté sur la figure 16, après gravure d'une partie de la face interne du flan, la figure 17a étant une vue partielle agrandie de la partie supérieure de la face interne du flan représenté sur la figure 17,
- la figure 18 est une vue schématiquement en coupe du flan gravé embouti représenté sur la figure 17, après sablage du fond de la face interne du flan, la figure 18a étant une vue partielle agrandie de la partie supérieure du fond de la face interne du flan représenté sur la figure 18,

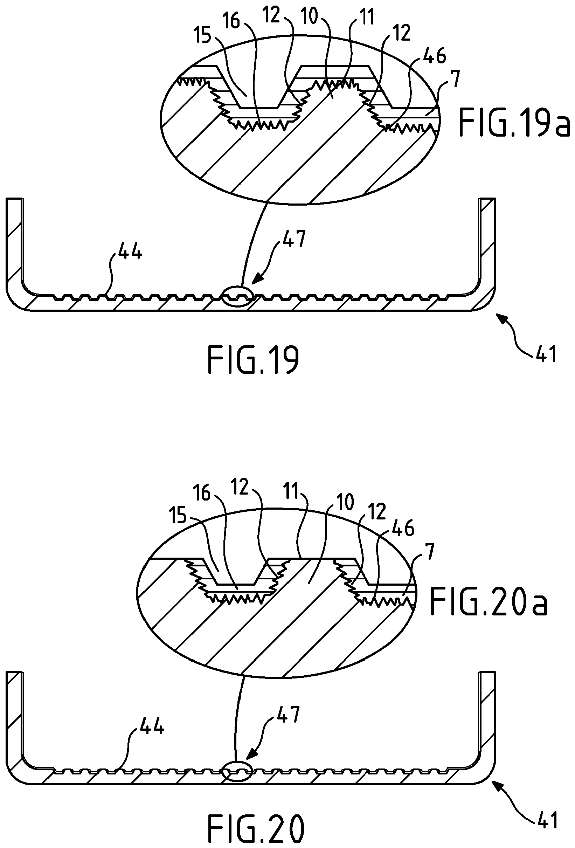

- la figure 19 est une vue schématiquement en coupe du flan gravé embouti sablé représenté sur la figure 19, après réalisation d'un revêtement sur le fond de la face interne du flan, la figure 19a étant une vue partielle agrandie de la partie supérieure du fond de la face interne du flan représenté sur la figure 19,
- la figure 20 est une vue schématiquement en coupe du flan embouti sablé revêtu représenté sur la figure 19, après brossage et/ou polissage des sommets des nervures formées sur le fond de la face interne du flan, la figure 20a étant une vue partielle agrandie de la partie supérieure du fond de la face interne du flan représenté sur la figure 20.

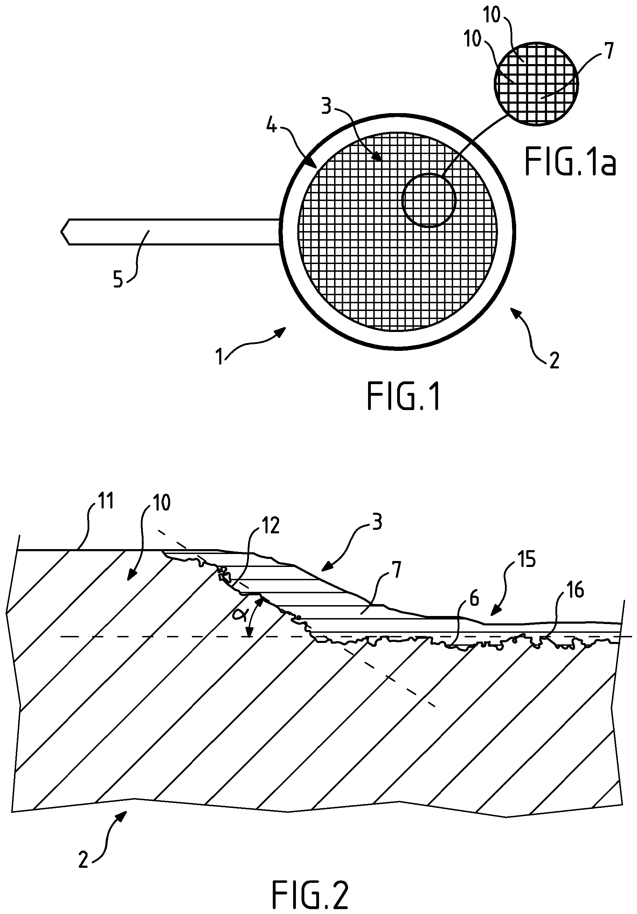

La figure 1 illustre un exemple de réalisation d'un récipient de cuisson 1 comportant un corps de récipient 2 présentant une face intérieure texturée 3 en acier inoxydable partiellement revêtue. La face intérieure texturée 3 forme une surface de cuisson. Tel que représenté sur la figure 1, la face intérieure texturée 3 est entourée par une face intérieure non texturée 4. La face intérieure non texturée 4 peut être revêtue ou non revêtue. La face intérieure non texturée 4 revêtue présente de préférence le même revêtement que la face intérieure texturée 3. La face intérieure non texturée 4 non revêtue est de préférence réalisée en acier inoxydable poli.

Selon une forme de réalisation illustrée sur la figure 1, la face intérieure texturée 3 s'étend sur une partie plane formant le fond du corps de récipient 2, et la face intérieure non texturée 4 s'étend sur une paroi latérale s'élevant à partir du fond du corps de récipient 2. Le récipient de cuisson 1 peut notamment être une poêle ou une casserole, ou encore une cuve d'appareil électrique de cuisson à fond plan.

A titre de variante, la face intérieure texturée 3 peut s'étendre au moins partiellement sur la paroi latérale s'élevant à partir du fond du corps de récipient 2. Le corps de récipient 2 ne présente alors pas nécessairement une face intérieure non texturée 4. La face intérieure texturée 3 peut ainsi recouvrir l'ensemble de l'intérieur du récipient de cuisson.

A titre de variante, le fond du corps de récipient 2 n'est pas nécessairement plan. Le récipient de cuisson 1 peut alors notamment être un wok, ou encore une cuve d'appareil électrique de cuisson à fond concave.

Tel qu'illustré sur la figure 1, le récipient de cuisson 1 comporte une poignée 5 montée sur le corps de récipient 2. Si désiré, le récipient de cuisson 1 peut comporter au moins une autre poignée montée sur le corps de récipient 2. Le corps de récipient 2 illustré sur la figure 1 présente une géométrie circulaire. A titre de variante, le corps de récipient 2 peut présenter d'autres géométries, notamment une géométrie ovale ou elliptique.

Selon un premier mode de réalisation, le corps de récipient 2 peut être réalisé à partir d'un flan 20 en acier inoxydable, illustré sur la figure 3. De préférence, l'acier inoxydable est de type austénitique, notamment un acier inoxydable de type 304, ou de type ferritique, notamment un acier inoxydable de type 441. Pour assurer une bonne répartition de la chaleur sur la face intérieure du corps de récipient 2, le corps de récipient 2 présente alors avantageusement un fond diffuseur 8 rapporté réalisé en matériau bon conducteur thermique (alliage d'aluminium, cuivre,...), illustré sur la figure 5. Si désiré, le fond diffuseur 8 rapporté peut être disposé entre le corps de récipient 2 et une plaque de fond 9 réalisée de préférence en acier inoxydable ferritique, pour permettre un chauffage par induction du récipient de cuisson 1.

Selon un deuxième mode de réalisation, le corps de récipient 2 peut être réalisé à partir d'un flan 30 ; 40 multicouche comportant au moins une face externe 30a ; 40a en acier inoxydable, illustré sur les figures 9 et 15. La face externe 30a ; 40a en acier inoxydable est prévue pour former la face intérieure du corps de récipient 2. La face externe 30a ; 40a en acier inoxydable est préférentiellement réalisée en acier inoxydable austénitique, par exemple en acier austénitique de type 304. Le flan 30 ; 40 comporte un cœur 30b ; 40b en matériau bon conducteur de chaleur ou formé par un assemblage de matériaux bons conducteur thermiques (alliage d'aluminium, cuivre,...). Le flan comporte préférentiellement une autre face externe 30c ; 40c réalisée en acier inoxydable ferritique, pour permettre un chauffage par induction du récipient de cuisson 1.

Tel que mieux visible sur la figure 1a, la face intérieure texturée 3 du corps de récipient 2 présente une pluralité de nervures 10. Les nervures 10 forment un tramage de la face intérieure texturée 3.

Tel que mieux visible sur la figure 2, les nervures 10 s'élèvent au dessus de creux 15. Les creux 15 présentent des fonds 16 recouverts d'un revêtement antiadhésif 7. Les nervures 10 présentent des sommets 11 non revêtus. Les nervures 10 présentent des côtés 12 distincts des fonds 16 des creux 15. En d'autres termes, les côtés 12 des nervures 10 s'élèvent au dessus des fonds 16 des creux 15. Les sommets 11 des nervures 10 s'élèvent au dessus du revêtement antiadhésif 7 recouvrant les fonds 16 des creux 15. Les côtés 12 des nervures 10 relient les sommets 11 des nervures 10 aux fonds 16 des creux 15. Le revêtement antiadhésif 7 s'élève sur les côtés 12 des nervures 10 à partir des fonds 16 des creux 15 en direction des sommets 11 des nervures 10, sans dépasser la hauteur des sommets 11. Ainsi les sommets 11 non revêtus forment une surface d'appui pour porter un ustensile de cuisine utilisé pour remuer, séparer ou servir les aliments, tel que par exemple une spatule. Le revêtement antiadhésif 7 recouvrant les creux 15 est protégé des mouvements de la spatule par les sommets 11 des nervures 10. Les nervures 10 sont de préférence réparties sur la face intérieure texturée 3 du corps de récipient 2 de sorte que la distance entre les sommets 11 de deux nervures 10 voisines, voire adjacentes, soit inférieure ou égale à 2 cm, quelle que soit l'orientation retenue.

La finesse de la largeur des sommets 11 des nervures 10 permet de minimiser le contact entre les aliments et les surfaces réalisées en acier inoxydable, et donc de favoriser la facilité de nettoyage de la surface de cuisson. La largeur des sommets 11 définie par leur plus petite dimension surfacique est avantageusement comprise entre 100 µm et 2 mm.

Tel que représenté sur les figures 1 et 1a, la face intérieure texturée 3 comporte une grille en acier inoxydable. La grille est formée par les sommets 11 des nervures 10, visibles sur la figure 2. Les nervures 10 sont reliées entre elles et délimitent des creux 15 séparés. En d'autres termes les nervures 10 séparent les creux 15. Les nervures 10 forment ainsi un maillage continu. Les interstices de la grille sont remplis par le revêtement antiadhésif 7.

Plus particulièrement dans l'exemple de réalisation illustré sur les figures 1 et 1a,les nervures 10 s'étendent selon deux directions perpendiculaires et forment un maillage de géométrie carrée.

La grille en acier inoxydable formée par les sommets 11 des nervures 10 assure une fonction de protection du revêtement antiadhésif 7. La grille en acier inoxydable peut présenter une maille de forme polygonale (par exemple carrée, rectangle, triangle, losange, hexagone) ou de forme elliptique (par exemple cercles ou ellipses juxtaposés). La surface de la maille (quelle que soit sa forme) est de préférence comprise entre 0,25 mm² et 1 cm². Le ratio entre la surface définie par la grille et la surface totale (pour la zone concernée par la présence de la grille) est compris entre 0,02 et 0,25. En d'autres termes, les sommets 11 des nervures 10 constituent entre 2% et 25% de la surface de cuisson.

A titre de variante, deux nervures 10 adjacentes ne sont pas nécessairement alignées ou perpendiculaires.

A titre de variante, le maillage n'est pas nécessairement continu. Au moins certains creux 15 pourraient être reliés entre eux. Au moins certaines des nervures 10 pourraient être entourées par des creux 15.

Tel que bien visible sur la figure 2, les fonds 16 des creux 15 et les côtés 12 des nervures 10 présentent une surface rugueuse 6 sous le revêtement antiadhésif 7, pour favoriser l'accrochage du revêtement antiadhésif 7.

Dans l'exemple de réalisation illustré sur les figures, la largeur des sommets 11 des nervures 10 est inférieure à la largeur des fonds 16 des creux 15 s'étendant entre deux nervures 10 adjacentes. Les sommets 11 des nervures 10 sont plans. Les nervures 10 présentent une section trapézoïdale.

Tel que bien visible sur la figure 2, les côtés 12 des nervures 10 forment des rampes reliant les sommets 11 des nervures 10 aux fonds 16 des creux 15. En d'autres termes, les côtés 12 des nervures 10 sont inclinés et forment des pentes s'élevant à partir des fonds 16 des creux 15. Ainsi le revêtement antiadhésif 7 recouvrant les fonds 16 des creux 15 peut s'élever progressivement pour recouvrir les côtés 12 des nervures 10. Tel que bien visible sur la figure 2, l'épaisseur du revêtement antiadhésif 7 est plus importante sur la partie inférieure des côtés 12 des nervures 10 que sur la partie supérieure des côtés 12 des nervures 10.

Avantageusement, tel que représenté sur la figure 2, les côtés 12 des nervures 10 s'élèvent par rapport aux fonds 16 des creux 15 avec un angle a inférieur à 45°. De préférence, l'angle a est compris entre 20° et 40°.

La profondeur de gravure définie entre les sommets 11 des nervures 10 et les fonds 16 des creux 15 est de préférence comprise entre 0,05 mm et 0,2 mm. La profondeur de gravure ciblée est par exemple de l'ordre de 0,1 mm.

Tel que bien visible sur la figure 2, les côtés 12 des nervures 10 sont recouverts par le revêtement antiadhésif 7; les sommets 11 des nervures 10 sont dépourvus de revêtement antiadhésif 7.

Le revêtement antiadhésif 7 peut être choisi parmi différents types.

Selon une forme de réalisation, le revêtement antiadhésif 7 présente une couche externe de PTFE (PolyTétraFluoroEthylène).

Selon une autre forme de réalisation, le revêtement antiadhésif 7 présente une couche externe de sol gel céramique.

Si désiré, au moins une couche intermédiaire peut être prévue sous la couche externe.

Le revêtement antiadhésif 7 constituant une proportion importante de la surface de cuisson, généralement majoritaire, permet d'obtenir une bonne facilité de nettoyage. La présence des sommets 11 des nervures 10 permet de réaliser une surface de support permettant d'utiliser des ustensiles rigides pour remuer, couper, servir les aliments, notamment des ustensiles métalliques tels que des spatules ou des couteaux, sans dégrader le revêtement antiadhésif 7 disposé dans les fonds 16 des creux 15.

Cette construction de la surface de cuisson permet de combiner une facilité de nettoyage importante garantie par le revêtement antiadhésif 7 avec une meilleure longévité du récipient de cuisson 1 garantie par la grille métallique formée par les sommets 11 des nervures 10, qui protège l'intégrité du revêtement antiadhésif 7 disposé dans les fonds 16 des creux 15 contre les agressions mécaniques.

La juxtaposition des surfaces des sommets 11 non revêtus et des creux 15 revêtus permet d'améliorer la résistance à la rayure sans pénaliser l'antiadhésivité. Cette juxtaposition permet aussi de différencier la surface de cuisson.

Dans le cas de l'utilisation de tôle d'acier inoxydable, le procédé d'obtention d'un récipient de cuisson 1 selon l'invention peut comporter les étapes suivantes, illustrées sur les figures 3 à 8a :
- Réalisation ou fourniture d'un flan 20 à partir d'une tôle d'acier inoxydable,
- Emboutissage du flan 20 pour former une calotte 21 comportant une face intérieure 22 et une face extérieure 23, la face intérieure 22 comportant une zone de fond 24 plane entourée par une paroi latérale 25,
- Frappe à chaud d'un fond diffuseur 8 sur la face extérieure 23 de la calotte 21, avec gravure d'un tramage 27 sur au moins une partie de la zone de fond 24 de la face intérieure 22 de la calotte 21, pour former un réseau de nervures 10 présentant des sommets 11 s'élevant au dessus de creux 15 et des côtés 12 distincts des fonds 16 des creux 15, les côtés 12 des nervures 10 reliant les sommets 11 des nervures 10 aux fonds 16 des creux 15,
- Sablage d'au moins la zone de fond 24 gravée de la face intérieure 22 de la calotte 21, pour créer des rugosités 26,
- Réalisation d'un revêtement antiadhésif 7 sur au moins la zone de fond 24 gravée sablée,
- Brossage et/ou polissage d'au moins la zone de fond 24 gravée sablée revêtue, pour faire apparaître l'acier inoxydable sur les sommets 11 des nervures 10.

Le tramage sur la zone de fond 24 de la surface de cuisson est ainsi obtenu lors de l'opération de frappe à chaud. Un poinçon possédant la trame (ou motif) que l'on souhaite graver sur le fond de la surface de cuisson est utilisé. La trame peut par exemple être gravée sur le poinçon par électroérosion.

L'utilisation de paramètres adéquats lors de la frappe (température de préchauffage, puissance de frappe,...) permet ainsi à la fois d'assurer l'adhérence du fond diffuseur 8 frappé et de graver la trame sur la zone de fond 24 de la face intérieure 22 avec une profondeur homogène, une profondeur de l'ordre de 0,1 mm étant visée. L'opération de frappe permet de graver le motif sur la partie plane du récipient de cuisson 1. Cette voie ne permet donc pas d'envisager d'avoir un tramage au niveau du rayon de courbure reliant la zone de fond 24 à la paroi latérale 25, ni sur la paroi latérale 25.

Selon un mode de réalisation préféré, le procédé consiste à frapper à chaud une plaque de fond 9 en acier inoxydable ferritique sur la face du fond diffuseur 8 opposée à la calotte 21, lors de la frappe à chaud du fond diffuseur 8 sur la face extérieure 23 de la calotte 21. Un récipient de cuisson 1 permettant un chauffage par induction peut ainsi être obtenu. La plaque de fond 9 se présente de préférence sous la forme d'un disque. Si désiré, la plaque de fond 9 peut être ajourée.

Dans le cas de l'utilisation de tôle d'acier multicouche comportant au moins une face externe en acier inoxydable, le procédé d'obtention d'un récipient de cuisson 1 selon l'invention peut comporter les étapes suivantes, illustrées sur les figures 9 à 14a :
- Réalisation ou fourniture d'un flan 30 à partir d'une tôle d'acier multicouche 30a, 30b, 30c comportant au moins une face externe 30a en acier inoxydable,
- Gravure d'un tramage 37 sur au moins une partie de ladite face externe 30a en acier inoxydable, pour former un réseau de nervures 10 présentant des sommets 11 s'élevant au dessus de creux 15 et des côtés 12 distincts des fonds 16 des creux 15, les côtés 12 des nervures 10 reliant les sommets 11 des nervures 10 aux fonds 16 des creux 15,
- Emboutissage du flan 30 pour former une calotte 31 comportant une face intérieure 32 et une face extérieure 33, la face intérieure 32 comportant une zone de fond 34 entourée par une paroi latérale 35, les nervures 10 s'étendant au moins sur une partie de la zone de fond 34,
- Sablage d'au moins la zone de fond 34 gravée pour créer des rugosités 36,
- Réalisation d'un revêtement antiadhésif 7 sur au moins la zone de fond 34 gravée sablée,
- Brossage et/ou polissage de la zone de fond 34 gravée sablée revêtue, pour faire apparaître l'acier inoxydable sur les sommets 11 des nervures 10.

Le motif peut être gravé de façon homogène sur l'ensemble de la surface de cuisson formée par la face intérieure 32, l'emboutissage ne dégradant pas le tramage 37.

Une opération de frappe, de préférence de frappe à chaud, peut être utilisée pour graver le motif. Cette opération permet de graver la trame que l'on souhaite sur la face externe 30a en acier inoxydable. De la même manière que pour un récipient de cuisson à fond frappé, un poinçon avec une trame obtenue par électroérosion est utilisé pour l'opération de frappe.

Dans le mode de réalisation précité, l'opération de frappe est réalisée avant l'emboutissage.

En variante, l'emboutissage du flan peut être réalisé avant l'opération de gravure d'un tramage. Le procédé d'obtention d'un récipient de cuisson 1 selon l'invention peut alors comporter les étapes suivantes, illustrées sur les figures 15 à 20a :
- Réalisation ou fourniture d'un flan 40 à partir d'une tôle d'acier multicouche 40a, 40b, 40c comportant au moins une face externe 40a en acier inoxydable,
- Emboutissage du flan 40 pour former une calotte 41 comportant une face intérieure 42 formée par ladite face externe 40a en acier inoxydable et une face extérieure 43, la face intérieure 42 comportant une zone de fond 44 entourée par une paroi latérale 45,
- Gravure d'un tramage 47 sur au moins une partie de la zone de fond 44, pour former un réseau de nervures 10 présentant des sommets 11 s'élevant au dessus de creux 15 et des côtés 12 distincts des fonds 16 des creux 15, les côtés 12 des nervures 10 reliant les sommets 11 des nervures 10 aux fonds 16 des creux 15,
- Sablage d'au moins la zone de fond 44 gravée pour créer des rugosités 46,
- Réalisation d'un revêtement antiadhésif 7 sur au moins la zone de fond 44 gravée sablée,
- Brossage et/ou polissage de la zone de fond 44 gravée sablée revêtue, pour faire apparaître l'acier inoxydable sur les sommets 11 des nervures 10.

La gravure du tramage 47 s'effectue alors sur au moins une partie de la zone de fond 44 plane après l'emboutissage du flan 40. Ce procédé ne permet donc pas d'envisager d'avoir un tramage au niveau du rayon de courbure reliant la zone de fond 44 à la paroi latérale 45, ni sur la paroi latérale 45.

Un sablage de la surface à revêtir est réalisé afin de créer suffisamment de rugosités 26 ; 36 ; 46 pour permettre l'adhérence maximale du revêtement antiadhésif 7 sans dégrader les sommets 11 formés lors de la gravure.

Optionnellement, un polissage des sommets 11 des nervures 10 est réalisé avant l'enduction du revêtement antiadhésif 7, afin de limiter l'adhérence du revêtement antiadhésif 7 sur les sommets 11 des nervures 10.

Pour un revêtement antiadhésif 7 de type PTFE, le sablage peut notamment être réalisé avec un abrasif corindon brun (alumine a). Les paramètres de rugosité suivants sont visés pour les rugosités 26, 36, 46 :
- Ra ≥ 2 µm préférentiellement 3 µm ≤ Ra ≤ 5 µm
- Rz ≥ 25 µm préférentiellement 30 µm ≤ Rz ≤ 50µm

Ra et Rz sont définis dans la norme ISO 4287. Ra représente la moyenne arithmétique des écarts à la moyenne, Rz représente la moyenne de la distance entre les 5 plus grands pics et les 5 plus profonds creux.

La topographie de surface peut être étudiée notamment avec un profilomètre avec palpeur muni d'un stylet fin équipé d'une pointe en diamant, ou encore avec un appareil de métrologie optique type Altisurf®, dans lequel un capteur confocal chromatique permet une mesure sans contact. L'étude de cette topographie de surface permet de définir des paramètres de rugosité de surface, définis ci-dessus.

Le revêtement antiadhésif 7 de type PTFE peut être appliqué par pistoletage sur la surface ayant subi le traitement de sablage. Si désiré, au moins une couche intermédiaire peut être prévue avant l'application de la couche externe de revêtement antiadhésif 7 de type PTFE. Après cuisson à 420°C du revêtement antiadhésif 7, un polissage de l'intérieur du corps de récipient 2 est effectué au moins sur la face intérieure texturée 3, et si désiré sur la face intérieure non texturée 4. Le polissage permet de révéler la surface du maillage en acier inoxydable par enlèvement préférentiel sur les sommets 11 des nervures 10, les creux 15 revêtus n'étant pas affectés par cette opération. Par ailleurs, l'extérieur du corps de récipient 2 est également poli afin d'éliminer la couche d'oxyde apparue au cours de la cuisson du revêtement PTFE.

Pour un revêtement antiadhésif 7 présentant une couche externe de sol gel céramique, un sablage de la surface à revêtir est réalisé afin de créer suffisamment de rugosité pour permettre l'adhérence maximale du revêtement antiadhésif 7 sans dégrader les sommets 11 formés lors de la gravure. Le sablage peut notamment être réalisé avec un abrasif corindon zircone.

Dans le cas de l'application d'un revêtement céramique, les conditions de sablage sont ajustées en vue d'obtenir les paramètres de rugosité suivants pour les rugosités 26, 36, 46 :
- Ra ≥ 1,5 µm préférentiellement 2 µm ≤ Ra ≤ 3 µm
- Rz ≥ 10 µm préférentiellement 15 µm ≤ Rz ≤ 30 µm

Le revêtement antiadhésif 7 de type céramique sol-gel peut être appliqué par pistoletage sur la surface ayant subi le traitement de sablage. Une épaisseur de revêtement de 20 à 40 µm peut être visée. Le cycle de cuisson du revêtement sol-gel sur un substrat en acier inoxydable peut comporter une montée en température à 250°C en 15 min, suivie d'un palier à 250°C pendant 15 min. Un polissage de l'intérieur du corps de récipient 2 permet de révéler la surface du maillage en acier inoxydable formée par les sommets 11 des nervures 10, par l'enlèvement préférentiel du revêtement sol-gel sur les sommets 11 des nervures 10. Les creux 15 revêtus céramique ne sont pas affectés par une telle opération. Par ailleurs, l'extérieur du corps de récipient 2 est également poli afin d'éliminer la couche d'oxyde apparue au cours de la cuisson du revêtement sol-gel.

Tel que bien visible sur les figures 8a, 14a et 20a, les côtés 12 des nervures 10 forment des rampes reliant les sommets 11 des nervures 10 aux fonds 16 des creux 15.

Tel que bien visible sur les figures 8a, 14a et 20a, les côtés 12 des nervures 10 sont recouverts par le revêtement antiadhésif 7 ; les sommets 11 des nervures 10 sont dépourvus de revêtement antiadhésif 7.

A titre de variante, les nervures 10 ne sont pas nécessairement obtenues par frappe à chaud ou par frappe à froid. Une gravure laser peut être effectuée sur le flan 20 ; 30 ; 40 avant ou après emboutissage. L'utilisation d'un laser de forte puissance permet d'atteindre les profondeurs de gravure visées (de l'ordre de 50 à 100 µm) aussi bien que la finesse des sommets 11 des nervures 10 souhaitée. Si désiré, une opération de frappe peut être conservée notamment pour assembler le fond diffuseur 8 et le cas échéant la plaque de fond 9 en acier inoxydable ferritique, lorsque le flan 20 est réalisé en acier inoxydable.

La présente invention n'est nullement limitée aux exemples de réalisation décrits et à leurs variantes, mais englobe de nombreuses modifications dans le cadre des revendications.

## Revendications

1. Récipient de cuisson (1) comportant un corps de récipient (2) présentant une face intérieure texturée (3) en acier inoxydable partiellement revêtue, la face intérieure texturée (3) présentant une pluralité de nervures (10) s'élevant au-dessus de creux (15), les creux (15) présentant des fonds (16) recouverts d'un revêtement antiadhésif (7), les nervures (10) présentant des sommets (11) non revêtus et des côtés (12) distincts des fonds (16) des creux (15), les côtés (12) des nervures (10) reliant les sommets (11) des nervures (10) aux fonds (16) des creux (15), les sommets (11) des nervures (10) s'élevant au dessus du revêtement antiadhésif (7) recouvrant les fonds (16) des creux (15), les fonds (16) des creux (15) et les côtés (12) des nervures (10) présentant une surface rugueuse (6) sous le revêtement antiadhésif (7), pour favoriser l'accrochage du revêtement antiadhésif (7), **caractérisé en ce que** les côtés (12) des nervures (10) forment des rampes reliant les sommets (11) des nervures (10) aux fonds (16) des creux (15), et **en ce que** le revêtement antiadhésif (7) s'élève sur les côtés (12) des nervures (10) à partir des fonds (16) des creux (15) en direction des sommets (11) des nervures (10), sans dépasser la hauteur des sommets (11).

2. Récipient de cuisson (1) selon la revendication 1, **caractérisé en ce que** l'épaisseur du revêtement antiadhésif (7) est plus importante sur la partie inférieure des côtés (12) des nervures (10) que sur la partie supérieure des côtés (12) des nervures (10).

3. Récipient de cuisson (1) selon l'une des revendications 1 ou 2, **caractérisé en ce que** la largeur des sommets (11) des nervures (10) est inférieure à la distance entre les sommets (11) de deux nervures (10) adjacentes.

4. Récipient de cuisson (1) selon l'une des revendications 1 à 3, **caractérisé en ce que** la largeur des sommets (11) des nervures (10) est inférieure à la largeur des fonds (16) des creux (15) s'étendant entre deux nervures (10) adjacentes.

5. Récipient de cuisson (1) selon l'une des revendications 1 à 4, **caractérisé en ce que** les côtés (12) des nervures (10) s'élèvent par rapport aux fonds (16) des creux (15) avec un angle (a) inférieur à 45°, et de préférence avec un angle (a) compris entre 20° et 40°.

6. Récipient de cuisson (1) selon l'une des revendications 1 à 5, **caractérisé en ce que** les sommets (11) des nervures (10) sont plans.

7. Récipient de cuisson (1) selon l'une des revendications 1 à 6, **caractérisé en ce que** les nervures (10) présentent une section trapézoïdale.

8. Récipient de cuisson (1) selon l'une des revendications 1 à 7, **caractérisé en ce que** la profondeur de gravure définie entre les sommets (11) des nervures (10) et les fonds (16) des creux (15) est comprise entre 0,05 mm et 0,2 mm.

9. Récipient de cuisson (1) selon l'une des revendications 1 à 8, **caractérisé en ce que** le revêtement antiadhésif (7) présente une couche externe de PTFE.

10. Récipient de cuisson (1) selon l'une des revendications 1 à 9, **caractérisé en ce que** le revêtement antiadhésif (7) présente une couche externe de sol gel céramique.

11. Récipient de cuisson (1) selon l'une des revendications 1 à 10, **caractérisé en ce qu'**il comporte au moins une poignée (5) montée sur le corps de récipient (2).

12. Récipient de cuisson (1) selon l'une des revendications 1 à 11, **caractérisé en ce que** les nervures (10) sont reliées entre elles et délimitent des creux (15) séparés.

13. Procédé d'obtention d'un récipient de cuisson (1), comprenant les étapes suivantes :
- Réalisation ou fourniture d'un flan (20) à partir d'une tôle d'acier inoxydable,
- Emboutissage du flan (20) pour former une calotte (21) comportant une face intérieure (22) et une face extérieure (23), la face intérieure (22) comportant une zone de fond (24) plane entourée par une paroi latérale (25),
- Frappe à chaud d'un fond diffuseur (8) sur la face extérieure (23) de la calotte (21), avec gravure d'un tramage (27) sur au moins une partie de la zone de fond (24) de la face intérieure (22) de la calotte (21), pour former un réseau de nervures (10) présentant des sommets (11) s'élevant au dessus de creux (15) et des côtés (12) distincts des fonds (16) des creux (15), les côtés (12) des nervures (10) reliant les sommets (11) des nervures (10) aux fonds (16) des creux (15), les côtés (12) des nervures (10) formant des rampes reliant les sommets (11) des nervures (10) aux fonds (16) des creux (15),
- Sablage d'au moins la zone de fond (24) gravée de la face intérieure (22) de la calotte (21), pour créer des rugosités (26),
- Réalisation d'un revêtement antiadhésif (7) sur au moins la zone de fond (24) gravée sablée,
- Brossage et/ou polissage d'au moins la zone de fond (24) gravée sablée revêtue, pour faire apparaître l'acier inoxydable sur les sommets (11) des nervures (10).

14. Procédé d'obtention d'un récipient de cuisson selon la revendication 13, **caractérisé en ce qu'**il consiste à frapper à chaud une plaque de fond (9) en acier inoxydable ferritique sur la face du fond diffuseur (8) opposée à la calotte (21), lors de la frappe à chaud du fond diffuseur (8) sur la face extérieure (23) de la calotte (21).

15. Procédé d'obtention d'un récipient de cuisson, comprenant les étapes suivantes :
- Réalisation ou fourniture d'un flan (30) à partir d'une tôle d'acier multicouche (30a, 30b, 30c) comportant au moins une face externe (30a) en acier inoxydable,
- Gravure d'un tramage (37) sur au moins une partie de ladite face externe (30a) en acier inoxydable, pour former un réseau de nervures (10) présentant des sommets (11) s'élevant au dessus de creux (15) et des côtés (12) distincts des fonds (16) des creux (15), les côtés (12) des nervures (10) reliant les sommets (11) des nervures (10) aux fonds (16) des creux (15), les côtés (12) des nervures (10) formant des rampes reliant les sommets (11) des nervures (10) aux fonds (16) des creux (15),
- Emboutissage du flan (30) pour former une calotte (31) comportant une face intérieure (32) et une face extérieure (33), la face intérieure (32) comportant une zone de fond (34) entourée par une paroi latérale (35), les nervures (10) s'étendant sur au moins une partie de la zone de fond (34),
- Sablage d'au moins la zone de fond (34) gravée pour créer des rugosités (36),
- Réalisation d'un revêtement antiadhésif (7) sur au moins la zone de fond (34) gravée sablée,
- Brossage et/ou polissage de la zone de fond (34) gravée sablée revêtue, pour faire apparaître l'acier inoxydable sur les sommets (11) des nervures (10).

16. Procédé d'obtention d'un récipient de cuisson (1), comprenant les étapes suivantes :
- Réalisation ou fourniture d'un flan (40) à partir d'une tôle d'acier multicouche comportant au moins une face externe (40a) en acier inoxydable,
- Emboutissage du flan (40) pour former une calotte (41) comportant une face intérieure (42) formée par ladite face externe (40a) en acier inoxydable et une face extérieure (43), la face intérieure (42) comportant une zone de fond (44) entourée par une paroi latérale (45),
- Gravure d'un tramage (47) sur au moins une partie de la zone de fond (44), pour former un réseau de nervures (10) présentant des sommets (11) s'élevant au dessus de creux (15) et des côtés (12) distincts des fonds (16) des creux (15), les côtés (12) des nervures (10) reliant les sommets (11) des nervures (10) aux fonds (16) des creux (15), les côtés (12) des nervures (10) formant des rampes reliant les sommets (11) des nervures (10) aux fonds (16) des creux (15),
- Sablage d'au moins la zone de fond (44) gravée pour créer des rugosités (46),
- Réalisation d'un revêtement antiadhésif (7) sur au moins la zone de fond (44) gravée sablée,
- Brossage et/ou polissage de la zone de fond (44) gravée sablée revêtue, pour faire apparaître l'acier inoxydable sur les sommets (11) des nervures (10).

17. Procédé d'obtention d'un récipient de cuisson selon l'une des revendications 13 à 16, **caractérisé en ce qu'**un polissage des sommets (11) des nervures (10) est réalisé avant l'enduction du revêtement antiadhésif (7), afin de limiter l'adhérence du revêtement antiadhésif (7) sur les sommets (11) des nervures (10)

## Patentansprüche

1. Garbehälter (1), der einen Behälterkörper (2) umfasst, der eine texturierte Innenfläche (3) aus rostfreiem Stahl, die teilweise beschichtet ist, aufweist, wobei die texturierte Innenfläche (3) eine Vielzahl von Rippen (10) aufweist, die über Vertiefungen (15) aufragen, wobei die Vertiefungen (15) Gründe (16) aufweisen, die mit einer Antihaftbeschichtung (7) bedeckt sind, wobei die Rippen (10) Scheitel (11) aufweisen, die unbeschichtet sind, und Seiten (12), die von den Gründen (16) der Vertiefungen (15) unterschiedlich sind, wobei die Seiten (12) der Rippen (10) die Scheitel (11) der Rippen (10) mit den Gründen (16) der Vertiefungen (15) verbinden, die Scheitel (11) der Rippen (10) über der Antihaftbeschichtung (7), die die Gründe (16) der Vertiefungen (15) bedeckt, aufragen, die Gründe (16) der Vertiefungen (15) und die Seiten (12) der Rippen (10) eine raue Oberfläche (6) unter der Antihaftbeschichtung (7) aufweisen, um das Haften der Antihaftbeschichtung (7) zu begünstigen, **dadurch gekennzeichnet, dass** die Seiten (12) der Rippen (10) Rampen, die die Scheitel (11) der Rippen (10) mit den Gründen (16) der Vertiefungen (15) verbinden, bilden, und dass die Antihaftbeschichtung (7) auf den Seiten (12) der Rippen (10) ausgehend von den Gründen (16) der Vertiefungen (15) in Richtung der Scheitel (11) der Rippen (10) aufragt, ohne die Höhe der Scheitel (11) zu überschreiten.

2. Garbehälter (1) nach Anspruch 1, **dadurch gekennzeichnet, dass** die Stärke der Antihaftbeschichtung (7) auf dem unteren Teil der Seiten (12) der Rippen (10) größer ist als auf dem oberen Teil der Seiten (12) der Rippen (10).

3. Garbehälter (1) nach einem der Ansprüche 1 oder 2, **dadurch gekennzeichnet, dass** die Breite der Scheitel (11) der Rippen (10) kleiner ist als der Abstand zwischen den Scheiteln (11) zweier aneinandergrenzender Rippen (10).

4. Garbehälter (1) nach einem der Ansprüche 1 bis 3, **dadurch gekennzeichnet, dass** die Breite der Scheitel (11) der Rippen (10) kleiner ist als die Breite der Gründe (16) der Vertiefungen (15), die sich zwischen zwei aneinandergrenzenden Rippen (10) erstrecken.

5. Garbehälter (1) nach einem der Ansprüche 1 bis 4, **dadurch gekennzeichnet, dass** die Seiten (12) der Rippen (10) in Bezug auf die Gründe (16) der Vertiefungen (15) mit einem Winkel (a) kleiner als 45° und vorzugsweise mit einem Winkel (a) zwischen 20° und 40° aufragen.

6. Garbehälter (1) nach einem der Ansprüche 1 bis 5, **dadurch gekennzeichnet, dass** die Scheitel (11) der Rippen (10) flach sind.

7. Garbehälter (1) nach einem der Ansprüche 1 bis 6, **dadurch gekennzeichnet, dass** die Rippen (10) einen trapezförmigen Querschnitt aufweisen.

8. Garbehälter (1) nach einem der Ansprüche 1 bis 7, **dadurch gekennzeichnet, dass** die Gravurtiefe, die zwischen den Scheiteln (11) der Rippen (10) und den Gründen (16) der Vertiefungen (15) definiert ist, zwischen 0,05 mm und 0,2 mm beträgt.

9. Garbehälter (1) nach einem der Ansprüche 1 bis 8, **dadurch gekennzeichnet, dass** die Antihaftbeschichtung (7) eine Außenschicht aus PTFE aufweist.

10. Garbehälter (1) nach einem der Ansprüche 1 bis 9, **dadurch gekennzeichnet, dass** die Antihaftbeschichtung (7) eine Außenschicht aus Keramik-Sol-Gel aufweist.

11. Garbehälter (1) nach einem der Ansprüche 1 bis 10, **dadurch gekennzeichnet, dass** er mindestens einen Griff (5), der auf den Behälterkörper (2) montiert ist, umfasst.

12. Garbehälter (1) nach einem der Ansprüche 1 bis 11, **dadurch gekennzeichnet, dass** die die Rippen (10) miteinander verbunden sind und getrennte Vertiefungen (15) abgrenzen.

13. Verfahren zum Erhalten eines Garbehälters (1), das die folgenden Schritte umfasst:
- Herstellen oder Liefern eines Rohlings (20) ausgehend von einem Blech aus rostfreiem Stahl,
- Tiefziehen des Rohlings (20), um eine Kalotte (21) zu bilden, die eine Innenfläche (22) und eine Außenfläche (23) umfasst, wobei die Innenfläche (22) eine flache Bodenzone (24) umfasst, die von einer Seitenwand (25) umgeben ist,
- Warmprägen eines Verteilerbodens (8) auf der Außenfläche (23) der Kalotte (21) mit Gravur eines Rasters (27) auf mindestens einem Teil der Bodenzone (24) der Innenfläche (22) der Kalotte (21), um ein Netzwerk aus Rippen (10) zu bilden, das Scheitel (11) aufweist, die über Vertiefungen (15) aufragen, und Seiten (12), die von den Gründen (16) der Vertiefungen (15) unterschiedlich sind, wobei die Seiten (12) der Vertiefungen (10) die Scheitel (11) der Rippen (10) mit den Gründen (16) der Vertiefungen (15) verbinden, wobei die Seiten (12) der Rippen (10) Rampen bilden, die die Scheitel (11) der Rippen (10) mit den Gründen (16) der Vertiefungen (15) verbinden,
- Sandstrahlen mindestens der gravierten Bodenzone (24) der Innenfläche (22) der Kalotte (21), um Rauigkeiten (26) zu bilden,
- Herstellen einer Antihaftbeschichtung (7) auf mindestens der gravierten, sandgestrahlten Bodenzone (24),
- Bürsten und/oder Polieren mindestens der beschichteten, sandgestrahlten, gravierten Bodenzone (24), um den rostfreien Stahl auf den Scheiteln (11) der Rippen (10) erscheinen zu lassen.

14. Verfahren zum Erhalten eines Garbehälters nach Anspruch 13, **dadurch gekennzeichnet, dass** es darin besteht, eine Bodenplatte (9) aus ferritischem rostfreiem Stahl auf der Fläche des Verteilerbodens (8), der Kalotte (21) entgegengesetzt bei dem Warmprägen des Verteilerbodens (8) auf der Außenfläche (23) der Kalotte (21) warmzuprägen.

15. Verfahren zum Erhalten eines Garbehälters (1), das die folgenden Schritte umfasst:
- Herstellen oder Liefern eines Rohlings (30) ausgehend von einem mehrschichtigen Stahlblech (30a, 30b, 30c), das mindestens eine Außenseite (30a) aus rostfreiem Stahl umfasst,
- Gravieren eines Rasters (37) auf mindestens einem Teil der Außenfläche (30a) aus rostfreiem Stahl, um ein Netzwerk aus Rippen (10) zu bilden, die Scheitel (11) aufweisen, die über Vertiefungen (15) aufragen, und Seiten (12), die von den Gründen (16) der Vertiefungen (15) unterschiedlich sind, wobei die Seiten (12) der Rippen (10) die Scheitel (11) der Rippen (10) mit den Gründen (16) der Vertiefungen (15) verbinden, die Seiten (12) der Rippen (10) Rampen bilden, die die Scheitel (11) der Rippen (10) mit den Gründen (16) der Vertiefungen (15) verbinden,
- Tiefziehen des Rohlings (30), um eine Kalotte (31) zu bilden, die eine Innenfläche (32) und eine Außenfläche (33) umfasst, wobei die Innenfläche (32) eine Bodenzone (34) umfasst, die von einer Seitenwand (35) umgeben ist, wobei sich die Rippen (10) auf mindestens einem Teil der Bodenzone (34) erstrecken,
- Sandstrahlen mindestens der gravierten Bodenzone (34), um Rauigkeiten (36) zu schaffen,
- Herstellen einer Antihaftbeschichtung (7) auf mindestens der gravierten, sandgestrahlten Bodenzone (34),
- Bürsten und/oder Polieren der beschichteten, sandgestrahlten, gravierten Bodenzone (34), um den rostfreien Stahl auf den Scheiteln (11) der Rippen (10) erscheinen zu lassen.

16. Verfahren zum Erhalten eines Garbehälters (1), das die folgenden Schritte umfasst:
- Herstellen oder Liefern eines Rohlings (40) ausgehend von einem mehrschichtigen Stahlblech, das mindestens eine Außenseite (40a) aus rostfreiem Stahl umfasst,
- Tiefziehen des Rohlings (40), um eine Kalotte (41) zu bilden, die eine Innenfläche (42) umfasst, die von der Außenfläche (40a) aus rostfreiem Stahl gebildet ist, und eine Außenfläche (43), wobei die Innenfläche (42) eine Bodenzone (44) umfasst, die von einer Seitenwand (45) umgeben ist,
- Gravieren eines Rasters (47) auf mindestens einem Teil der Bodenzone (44), um ein Netzwerk aus Rippen (10) zu bilden, die Scheitel (11) aufweisen, die über Vertiefungen (15) aufragen, und Seiten (12), die von den Gründen (16) der Vertiefungen (15) unterschiedlich sind, wobei die Seiten (12) der Rippen (10) die Scheitel (11) der Rippen (10) mit den Gründen (16) der Vertiefungen (15) verbinden, die Seiten (12) der Rippen (10) Rampen bilden, die die Scheitel (11) der Rippen (10) mit den Gründen (16) der Vertiefungen (15) verbinden,
- Sandstrahlen mindestens der gravierten Bodenzone (44), um Rauigkeiten (46) zu schaffen,
- Herstellen einer Antihaftbeschichtung (7) auf mindestens der gravierten, sandgestrahlten Bodenzone (44),
- Bürsten und/oder Polieren der beschichteten, sandgestrahlten, gravierten Bodenzone (44), um den rostfreien Stahl auf den Scheiteln (11) der Rippen (10) erscheinen zu lassen.

17. Verfahren zum Erhalten eines Garbehälters nach einem der Ansprüche 13 bis 16, **dadurch gekennzeichnet, dass** ein Polieren der Scheitel (11) der Rippen (10) vor dem Überziehen der Antihaftbeschichtung (7) ausgeführt wird, um die Haftung der Antihaftbeschichtung (7) auf den Scheiteln (11) der Rippen (10) einzuschränken.

## Claims

1. Cooking vessel (1) comprising a vessel body (2) with a textured, partially coated stainless steel inner surface (3), the textured inner surface (3) having a plurality of ribs (10) rising above recesses (15), the recesses (15) having bottoms (16) covered with a non-stick coating (7), the ribs (10) having tops (11) that are not coated and sides (12) separate from the bottoms (16) of the recesses (15), the sides (12) of the ribs (10) connecting the tops (11) of the ribs (10) to the bottoms (16) of the recesses (15), the tops (11) of the ribs (10) rising above the non-stick coating (7) that covers the bottoms (16) of the recesses (15), the bottoms (16) of the recesses (15) and the sides (12) of the ribs (10) having a rough surface (6) under the non-stick coating (7) in order to improve the grip of the non-stick coating (7), **characterised in that** the sides (12) of the ribs (10) form ramps connecting the tops (11) of the ribs (10) to the bottoms (16) of the recesses (15), and **in that** the non-stick coating (7) rises on the sides (12) of the ribs (10) from the bottoms (16) of the recesses (15) in the direction of the tops (11) of the ribs (10) without exceeding the height of the tops (11).

2. Cooking vessel (1) according to claim 1, **characterised in that** the thickness of the non-stick coating (7) is greater on the lower part of the sides (12) of the ribs (10) than on the top part of the sides (12) of the ribs (10).

3. Cooking vessel (1) according to one of claims 1 or 2, **characterised in that** the width of the tops (11) of the ribs (10) is smaller than the distance between the tops (11) of two adjacent ribs (10).

4. Cooking vessel (1) according to one of claims 1 to 3, **characterised in that** the width of the tops (11) of the ribs (10) is smaller than the width of the bottoms (16) of the recesses (15) extending between two adjacent ribs (10).

5. Cooking vessel according to one of claims 1 to 4, **characterised in that** the sides (12) of the ribs (10) rise with respect to the bottoms (16) of the recesses (15) at an angle (α) of less than 45°, and preferably at an angle (α) between 20° and 40°.

6. Cooking vessel (1) according to one of claims 1 to 5, **characterised in that** the tops (11) of the ribs (10) are flat.

7. Cooking vessel (1) according to one of claims 1 to 6, **characterised in that** the ribs (10) have a trapezoidal cross-section.

8. Cooking vessel (1) according to one of claims 1 to 7, **characterised in that** the cutting-in depth defined between the tops (11) of the ribs (10) and the bottoms (16) of the recesses (15) is between 0.05 mm and 0.2 mm.

9. Cooking vessel (1) according to one of claims 1 to 8, **characterised in that** the non-stick coating (7) has an outer layer of PTFE.

10. Cooking vessel (1) according to one of claims 1 to 9, **characterised in that** the non-stick coating (7) has an outer layer of sol-gel ceramic.

11. Cooking vessel (1) according to one of claims 1 to 10, **characterised in that** it comprises at least one handle (5) mounted on the vessel body (2).

12. Cooking vessel (1) according to one of claims 1 to 11, **characterised in that** the ribs (10) are connected to one another and delimit separate recesses (15).

13. Method for producing a cooking vessel (1), comprising the following steps:
- Creation or procurement of a blank (20) from a sheet of stainless steel,
- Pressing of the blank (20) to form a cap (21) comprising an inner surface (22) and an outer surface (23), the inner surface (22) comprising a flat bottom zone (24) surrounded by a side wall (25),
- Hot-stamping of a heat-diffusing base (8) on the outer surface (23) of the cap (21), with engraving of a pattern (27) on at least a part of the bottom zone (24) of the inner surface (22) of the cap (21), to form a network of ribs (10) having tops (11) rising above recesses (15) and sides (12) separate from the bottoms (16) of the recesses (15), the sides (12) of the ribs (10) connecting the tops (11) of the ribs (10) to the bottoms (16) of the recesses (15), the sides (12) of the ribs (10) forming ramps connecting the tops (11) of the ribs (10) to the bottoms (16) of the recesses (15),
- Sanding of at least the engraved bottom zone (24) of the inner surface (22) of the cap (21), to create roughness (26),
- Creation of an anti-stick coating (7) on at least the engraved and sanded bottom zone (24),
- Brushing and/or polishing of at least the engraved, sanded and coated bottom zone (24), to reveal the stainless steel on the tops (11) of the ribs (10).

14. Method for producing a cooking vessel according to claim 13, **characterised in that** it consists in hot-stamping a bottom plate (9) made of ferritic stainless steel on the surface of the heat-diffusing base (8) opposite the cap (21), during the step of hot-stamping the heat-diffusing base (8) on the outer surface (23) of the cap (21).

15. Method for producing a cooking vessel, comprising the following steps:
- Creation or procurement of a blank (30) from a multi-layer sheet of steel (30a, 30b, 30c) comprising at least one outer surface (30a) made of stainless steel,
- Engraving of a pattern (37) on at least one part of said outer surface (30a) made of stainless steel, to form a network of ribs (10) having tops (11) rising above recesses (15) and sides (12) separate from the bottoms (16) of the recesses (15), the sides (12) of the ribs (10) connecting the tops (11) of the ribs (10) to the bottoms (16) of the recesses (15), the sides (12) of the ribs (10) forming ramps connecting the tops (11) of the ribs (10) to the bottoms (16) of the recesses (15),
- Pressing of the blank (30) to form a cap (31) comprising an inner surface (32) and an outer surface (33), the inner surface (32) comprising a bottom zone (34) surrounded by a side wall (35), the ribs (10) extending on at least a part of the bottom zone (34),
- Sanding of at least the engraved bottom zone (34) to create roughness (36),
- Creation of an anti-stick coating (7) on at least the engraved and sanded bottom zone (34),
- Brushing and/or polishing of at least the engraved, sanded and coated bottom zone (34), to reveal the stainless steel on the tops (11) of the ribs (10).

16. Method for producing a cooking vessel (1), comprising the following steps:
- Creation or procurement of a blank (40) from a multi-layer sheet of steel comprising at least one outer surface (40a) made of stainless steel,
- Pressing of the blank (40) to form a cap (41) comprising an inner surface (42) formed by said outer surface (40a) made of stainless steel and an outer surface (43), the inner surface (42) comprising a bottom zone (44) surrounded by a side wall (45),
- Engraving of a pattern (47) on at least one part of the bottom zone (44), to form a network of ribs (10) having tops (11) rising above recesses (15) and sides (12) separate from the bottoms (16) of the recesses (15), the sides (12) of the ribs (10) connecting the tops (11) of the ribs (10) to the bottoms (16) of the recesses (15), the sides (12) of the ribs (10) forming ramps connecting the tops (11) of the ribs (10) to the bottoms (16) of the recesses (15),
- Sanding of at least the engraved bottom zone (44) to create roughness (46),
- Creation of an anti-stick coating (7) on at least the engraved and sanded bottom zone (44),
- Brushing and/or polishing of at least the engraved, sanded and coated bottom zone (44), to reveal the stainless steel on the tops (11) of the ribs (10).

17. Method for producing a cooking vessel according to one of claims 13 to 16, **characterised in that** the polishing of the tops (11) of the ribs (10) is performed prior to the anti-stick coating (7) process, in order to limit the attachment of the anti-stick coating (7) on the tops (11) of the ribs (10).
